# EUROPÄISCHE PATENTSCHRIFT

(11) **EP 2 334 969 B1**
(45) Veröffentlichungstag und Bekanntmachung des Hinweises auf die Patenterteilung: **26.08.2015**
(21) Anmeldenummer: 09778449.0
(22) Anmeldetag: 10.09.2009
(51) Int. Cl.: F16L 41/12, C02F 3/20, B01F 3/04

(54) **BEFESTIGUNGSVORRICHTUNG FOR ROHRBELÜFTER ZUR ABWASSERREINIGUNG**
FIXING DEVICE FOR PIPE AERATOR FOR WASTE WATER PURIFICATION
DISPOSITIF DE FIXATION POUR AÉRATEUR TUBULAIRE DESTINÉ À L ÉPURATION DES EAUX USÉES

(30) Priorität: 12.09.2008 DE 102008047093
(43) Veröffentlichungstag der Anmeldung: 22.06.2011
(73) Patentinhaber: Rehau AG + Co, 95111 Rehau (DE)
(72) Erfinder: KANIA, Guido, 91080 Marloffstein (DE); HENDEL, Roland, 91086 Aurachtal (DE); WURM, Hans-Robert, 91489 Wilhelmsdorf (DE); KAMPFL, Corinna, 96123 Litzendorf (DE)
(86) Internationale Anmeldenummer: PCT/EP2009/006568
(87) Internationale Veröffentlichungsnummer: WO 2010/028827

(56) Entgegenhaltungen:
- EP-A1- 1 469 246
- DE-A1- 19 508 651
- DE-A1- 19 912 560
- US-A1- 2003 006 512

## Beschreibung

Die Erfindung betrifft eine Befestigungsvorrichtung für Rohrbelüfter zur Abwasserreinigung, um mindestens einen Rohrbelüfter an einem Zentralrohr derart zu befestigen, dass dem Rohrbelüfter Luft aus dem Zentralrohr zugeführt werden kann.

Derartige Befestigungsvorrichtung ist bereits bekannt. Bei einer herkömmlichen Lösung werden zwei senkrecht von einem Zentralrohr in entgegen gesetzten Richtungen abragende Rohrbelüfter gegenseitig über eine Gewindestange befestigt. Derartige Befestigungsvorrichtungen sind montageunfreundlich, fordern eine lange Montagezeit und benötigen zwei Personen für die Installation des Rohrbelüfterpaares. Aus der DE 195 08 651 A1 ist eine auf ein mediumsführendes Rohr aufklemmbare zweitteilige Einheit bekannt.

Der Erfindung liegt die Aufgabe zugrunde, eine montagefreundlichere Befestigungsvorrichtung für Rohrbelüfter zur Abwasserreinigung bereitzustellen, um mindestens einen Rohrbelüfter an einem Zentralrohr derart zu befestigen, dass dem Rohrbelüfter Luft aus dem Zentralrohr zugeführt werden kann.

Um die der Erfindung zugrunde liegende Aufgabe zu lösen, wird die Befestigungsvorrichtung für Rohrbelüfter zur Abwasserreinigung nach Anspruch 1 bereitgestellt, wobei die Befestigungsvorrichtung als um den Umfang des Zentralrohrs schliessbarer Rohrsattel ausgebildet ist und gelenkig verbundene Schalen aufweist, wobei zumindest eine der Schalen einen Luftzuführabschnitt aufweist, durch welchen dem Rohrbelüfter Luft aus dem Zentralrohr zugeführt werden kann. Die erfindungsgemäße Befestigungsvorrichtung ist wesentlich leichter montierbar sowie demontierbar als die herkömmliche Befestigungsvorrichtung und ermöglicht konkurrenzlos kurze Montagezeiten für Rohrbelüfter.

Bevorzugte Weiterbildungen der Erfindung sind Gegenstände der Unteransprüche.

Es kann sich als vorteilhaft erweisen, wenn die Schalen mittels einer Verschlusseinrichtung zwischen einer geöffneten Konfiguration, in welcher die Schalen vom Zentralrohr lösbar sind, und einer geschlossenen Konfiguration, in welcher die Schalen um den Umfang des Zentralrohrs geschlossen sind, überführbar sind. Im Gegensatz zur herkömmlichen Befestigungsvorrichtung wird anstelle aufwändiger Schraubverbindungen nur eine Verschlusseinrichtung betätig, was die Montagefreundlichkeit der erfindungsgemäßen Befestigungsvorrichtung weiter verbessert.

Es kann sich als hilfreich erweisen, wenn zumindest eine Schale einen im Wesentlichen bogenförmigen Anlageabschnitt aufweist, der an einer Mantelfläche des Zentralrohrs in Anlage bringbar ist, wobei der Luftzuführabschnitt im Wesentlichen radial vom Anlageabschnitt abragt. Dadurch kann der Rohrbelüfter in optimaler Ausrichtung radial zum Zentralrohr montiert werden.

Es kann sich als nützlich erweisen, wenn der Luftzuführabschnitt einen Zentriervorsprung aufweist, der über eine Anlagefläche des Anlageabschnitts hervorsteht. Dadurch kann die erfindungsgemäße Befestigungsvorrichtung nur in der bestimmungsgemäßen Montageposition geschlossen werden, so dass die Gefahr von Montagefehlern erheblich verringert werden kann.

Es kann sich als praktisch erweisen, wenn der Luftzuführabschnitt eine Lufteintrittsöffnung aufweist, über welche Luft aus dem Zentralrohr in den Luftzuführabschnitt eintritt, wobei die Lufteintrittsöffnung von dem Zentriervorsprung zumindest abschnittsweise umrandet ist. Dadurch kann sich die Befestigungsvorrichtung bei der Montage selbsttätig in den Luftverteilerbohrungen des Zentralrohrs zentrieren, so dass eine optimale Luftversorgung des Luftzuführabschnitts sichergestellt ist.

Es kann vorteilhaft sein, wenn der Luftzuführabschnitt eine den Zentriervorsprung umrandende Dichtung aufweist. So sind keine eng tolerierten Luftverteilerbohrungen am Zentralrohr notwendig, weil die Dichtung weit außerhalb der Lufteintrittsöffnung platziert werden kann.

Der Luftzuführabschnitt weist eine radiale Luftaustrittsöffnung auf, die in einer Mantelfläche des Luftzuführabschnitts ausgebildet ist. Der Luftzuführabschnitt dient einerseits als Flansch zum Anbringen eines Stützrohrs zur Verlängerung des Luftzuführabschnitts in axialer Richtung des Luftzuführabschnitts, andererseits als Stützrohr selbst.

Das Stützrohr weist vorzugsweise denselben Außendurchmesser auf wie der Luftzuführabschnitt, wobei die Mantelflächen des Stützrohrs und des Luftzuführabschnitts bündig ineinander übergehen. Über das Stützrohr und den Luftzuführabschnitt wird eine luftdurchlässige aber wasserundurchlässige Membran gezogen. Die Membran wird endseitig, d.h. beiderseits der Luftaustrittsöffnung, beispielsweise über Rohrschellen gegenüber dem Stützrohr und dem Luftzuführabschnitt abgedichtet. Die Luft tritt in radialer Richtung des Luftzuführabschnitts aus der Luftaustrittsöffnung aus, und gelangt so optimal zwischen die Membran und das Stützrohr. Die Luftdurchlässigkeit der Membran ist so bemessen, dass das gewünschte Belüftungsergebnis erreicht wird. Durch die erfindungsgemäß konstruierte Befestigungsvorrichtung wird erreicht, dass ein beliebig langer Rohrbelüfter am Luftzuführabschnitt besonders einfach installierbar und anschließbar ist.

Es kann nützlich sein, wenn der Luftzuführabschnitt eine Doppelwandstruktur mit einer Innenwand und einer Außenwand aufweist. Vorzugsweise sind die Innenwand und die Außenwand über sich radial zur Innenwand erstreckende Stegabschnitte verbunden. Dadurch kann der Luftzuführabschnitt mit einer besonders steifen und stabilen Struktur ausgestattet werden. Vorzugsweise sind die Innenwand und die Außenwand mit unterschiedlichen Funktionen belegt. Beispielsweise ist der Zentriervorsprung und/oder die Lufteintrittsöffnung an einem inneren Ende der Innenwand ausgebildet, und/oder die Luftaustrittsöffnung ist an einem äußeren Ende der Außenwand ausgebildet.

Es kann von Vorteil sein, wenn der Luftzuführabschnitt ein Rückschlagventil aufweist, um einen Austritt von Fluiden aus dem Luftzuführabschnitt zuzulassen und ein Eindringen von Fluiden in den Luftzuführabschnitt zu verhindern. Falls die Membran während des Betriebs platzt oder reißt, kann verhindert werden, dass Abwasser über die defekte Membran in die Befestigungsvorrichtung, und von dort in das Zentralrohr gelangt. Das Rückschlagventil ist vorzugsweise als Teller-, Platten- oder Kugelventil ausgebildet.

Es kann nützlich sein, wenn die Schale zumindest eine in Umfangsrichtung des Anlageabschnitts und/oder in Umfangsrichtung des Luftzuführabschnitts verlaufende Versteifungsrippe aufweist. Dadurch kann die Befestigungsvorrichtung mit einer besonders steifen und stabilen Struktur ausgestattet werden, um auch längere Stützrohre problemlos tragen zu können.

Es kann sich als vorteilhaft erweisen, wenn die Verschlusseinrichtung als Kniehebel-Spannverschluss ausgebildet ist und zwei gelenkig verbundene Abschnitte unterschiedlicher Länge aufweist, die mit den Schalen in der geschlossenen Konfiguration derart zusammenzuwirken, dass sie Kräfte in entgegengesetzten Richtungen auf zwei unterschiedliche Schalen ausüben. Durch die Verschlusseinrichtung kann die Befestigungsvorrichtung von einer Person werkzeugfrei montiert werden.

Es kann sich als hilfreich erweisen, wenn die Schalen identische Formen aufweisen. Dadurch können die Schalen mit nur einem Werkzeug hergestellt werden, was die Herstellung der Schalen wesentlich vereinfacht und sich vorteilhaft auf die Herstellungskosten der Befestigungsvorrichtung auswirkt. Vorzugsweise sind die den Luftzuführabschnitt aufweisenden Schalen einteilig aus Kunststoff in demselben Spritzgusswerkzeug hergestellt, so dass sie identische Formen aufweisen.

### Kurze Beschreibung der Zeichnungen

Es zeigen:
- Fig. 1: eine Prinzipskizze der erfindungsgemäßen Befestigungsvorrichtung, wobei zwei Rohrbelüfter durch die Befestigungsvorrichtung an einem Zentralrohr derart befestigt sind, dass den Rohrbelüftern Luft aus dem Zentralrohr über die Befestigungsvorrichtung zugeführt wird.
- Fig. 2: eine Schnittansicht der erfindungsgemäßen Befestigungsvorrichtung in der geschlossenen Konfiguration.
- Fig. 3: eine Vorderansicht der erfindungsgemäßen Befestigungsvorrichtung aus Fig. 2.
- Fig. 4: eine Seitenansicht der erfindungsgemäßen Befestigungsvorrichtung aus Fig. 2.
- Fig. 5: verschiedene perspektivische Ansichten der erfindungsgemäßen Befestigungsvorrichtung aus Fig. 2.
- Fig. 6: eine Vorderansicht der Verschlusseinrichtung der erfindungsgemäßen Befestigungsvorrichtung.
- Fig. 7: eine Seitenansicht der Verschlusseinrichtung aus Fig. 6.
- Fig. 8: eine Schnittansicht der Verschlusseinrichtung aus Fig. 6 entlang der Linie VIII-VIII.
- Fig. 9: eine perspektivische Ansicht der Verschlusseinrichtung aus Fig. 6.

### Detaillierte Beschreibung des bevorzugten Ausführungsbeispiels

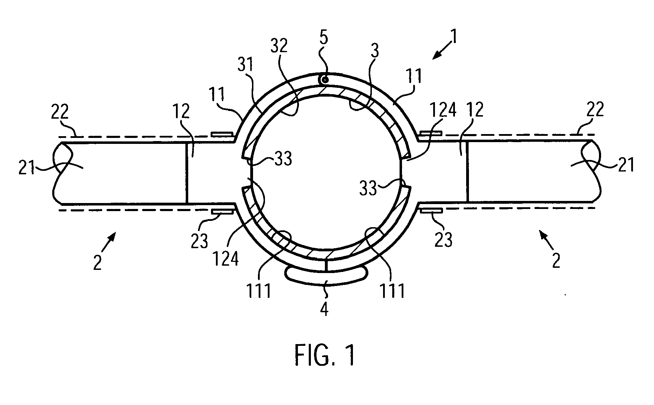

Fig. 1 zeigt eine Prinzipskizze der erfindungsgemäßen Befestigungsvorrichtung 1, die ein Paar von Rohrbelüftern 2 zur Abwasserreinigung an einem Zentralrohr 3 derart befestigt, dass den Rohrbelüftern 2 Luft aus dem Zentralrohr 3 zugeführt werden kann. Die Prinzipskizze veranschaulicht, dass die erfindungsgemäße Befestigungsvorrichtung 1 als um den Umfang des Zentralrohrs 3 schließbarer Rohrsattel ausgebildet ist und gelenkig verbundene Schalen 11 aufweist. Die Schalen 11 werden mit nur einem, insbesondere demselben, Spritzgusswerkzeug hergestellt und weisen identische Formen auf. Jede der Schalen 11 weist einen im Wesentlichen bogenförmigen Anlageabschnitt auf, der an einer Mantelfläche 31 des Zentralrohrs 3 in Anlage bringbar ist und eine Bogenlänge von ca. 180° überspannt. Ein Luftzuführabschnitt 12 erstreckt sich im Wesentlichen radial zur Krümmungsachse des bogenförmigen Anlageabschnitts nach außen. Durch den Luftzuführabschnitt 12 kann dem Rohrbelüfter 2 Luft aus dem Zentralrohr 3 zugeführt werden. Die beiden Schalen 11 sind durch ein Scharnier 5 gelenkig verbunden und mittels einer Verschlusseinrichtung 4 zwischen einer geöffneten Konfiguration, in welcher die Schalen 11 um das Zentralrohr 3 anordenbar und davon lösbar sind, und einer geschlossenen Konfiguration, in welcher die Schalen 11 um den Umfang des Zentralrohrs 3 geschlossen sind, überführbar.

Die Prinzipskizze gemäß Fig. 1 bezieht sich auf die geschlossene Konfiguration der Befestigungsvorrichtung 1 bzw. der Schalen 11. In der geschlossenen Konfiguration befinden sich bogenförmige Anlageflächen 111 an den Anlageabschnitten der Schalen 11 an der Mantelfläche 31 des Zentralrohrs 3 in Anlage. Zentriervorsprünge 124 der Schalen 11 greifen in entsprechende Luftverteileröffnungen 33 in der Wand des Zentralrohrs 3 derart ein, dass der Luftzuführabschnitt 12 jeder Schale 11 mit dem Zentralrohr 3 kommunizieren kann. An dem Luftzuführabschnitt 12 jeder Schale 11 ist ein Rohrbelüfter 2 montiert. Der Rohrbelüfter 2 umfasst ein Stützrohr 21, welches im Wesentlichen denselben Außendurchmesser wie der Luftzuführabschnitt 12 aufweist.

Das Stützrohr 21 ist an die axiale Endseite des Luftzuführabschnitts 12 derart angeschweißt, dass die Mantelflächen des Stützrohrs 21 und des Luftzuführabschnitts 12 bündig ineinander übergehen. Das Stützrohr 21 und der Luftzuführabschnitt 12 sind mit einer elastischen, luftdurchlässigen aber wasserundurchlässigen Membran 22 überzogen, die am Ansatz des Luftzuführabschnitts 12 mittels eines Befestigungsmittels 23, z. B. einer Rohrschelle, derart festgelegt ist, dass über den Luftzuführabschnitt 12 Luft aus dem Zentralrohr 3 zwischen das Stützrohr 21 und die Membran 22 gelangt. Die Schalen 11 sind gegenüber dem Zentralrohr 3 derart abgedichtet, dass nur die Rohrbelüfter 2 mit dem Zentralrohr 3 kommunizieren können, ohne dass Luft anderweitig entweicht.

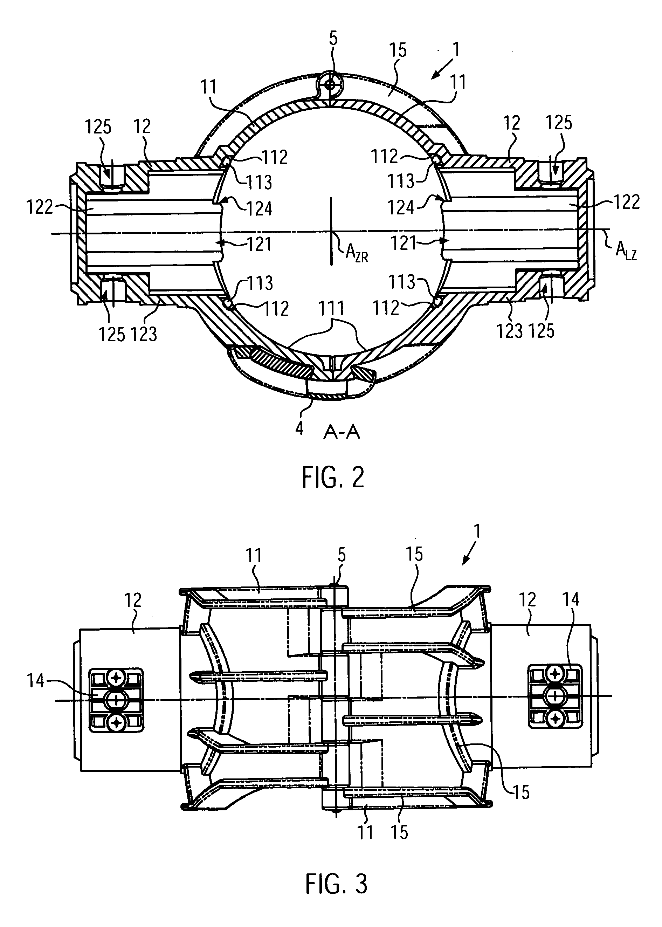

Fig. 2 zeigt eine detailgetreue Schnittansicht der erfindungsgemäßen Befestigungsvorrichtung 1 entlang einer Achse A_{LZ} der Luftzuführabschnitte 12. Die wesentlichen Elemente der Befestigungsvorrichtung 1 wurden bereits im Zusammenhang mit der Prinzipskizze gemäß Fig. 1 erläutert. Identische Merkmale sind mit identischen Bezugszeichen versehen.

Der Luftzuführabschnitt 12 jeder Schale 11 umfasst eine Lufteintrittsöffnung 121, über welche Luft aus dem Zentralrohr in den Luftzuführabschnitt 12 eintritt, eine Innenwand 122 und eine Außenwand 123. Die Innenwand 122 und die Außenwand 123 sind im Wesentlichen rohrförmig ausgebildet und bilden eine konzentrische Doppelwandstruktur, wobei die Lufteintrittsöffnung 121 und ein Zentriervorsprung 124 am inneren Ende der Innenwand ausgebildet sind. In einer in der Anlagefläche 111 des Anlageabschnitts ausgebildeten, ringförmigen Nut 112 ist ein O-Ring 113 angeordnet, der eine Dichteinrichtung bildet, um die Schale 11 gegenüber der Mantelfläche 31 des Zentralrohrs 3 abzudichten. Der Durchmesser des O-Rings 113 entspricht in etwa dem Durchmesser der Außenwand bzw. des Außenrohres 123 des Luftzuführabschnitts 12. Die Außenwand 123 des Luftzuführabschnitts 12 wird von Luftaustrittsöffnungen 125 durchbrochen, deren Achsen radial zur Achse A_{LZ} des Luftzuführabschnitts 12 und in einer zur einer Achse A_{ZR} des Zentralrohrs senkrechten Ebene ausgebildet sind. Die beiden Schalen 11 sind einerseits über das Scharnier 5 gelenkig verbunden, und werden andererseits durch die Verschlusseinrichtung 4 in der geschlossenen Konfiguration formschlüssig zusammengehalten. Die dargestellte Befestigungsvorrichtung 1 ist für einen nominalen Zentralrohrdurchmesser von 110,4 mm und einem nominalen Stützrohr-Außendurchmesser von 63,05 mm ausgelegt.

Fig. 3 zeigt eine Vorderansicht der erfindungsgemäßen Befestigungsvorrichtung 1 gemäß Fig. 2. In Fig. 3 sind Versteifungsrippen 15 zu erkennen, die im Wesentlichen in Umfangsrichtung des bogenförmigen Anlageabschnitts der Schale 11 und/oder in Umfangrichtung des Luftzuführabschnitts 12 verlaufen. Jeder Luftaustrittsöffnung 125 des Luftzuführabschnitts 12 ist ein Rückschlagventil 14 zugeordnet, welches außenseitig auf die Außenwand 123 des Luftzuführabschnitts 12 aufgeschraubt ist, um ein Eindringen von Flüssigkeiten in den Luftzuführabschnitt 12 von außen zu verhindern, für den Fall, dass die Membran des Rohrbelüfters 2 im Betrieb reißt oder platzt.

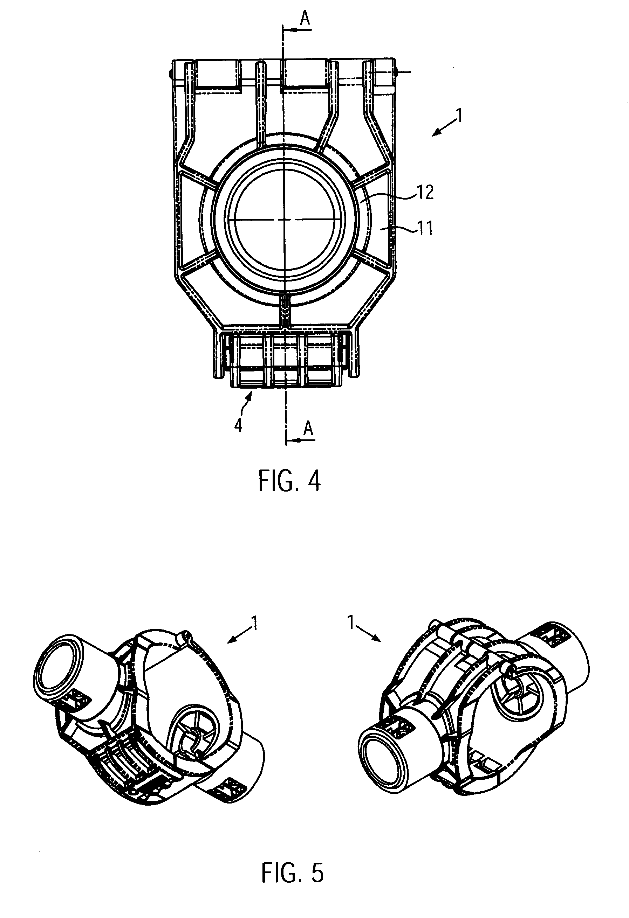

Fig. 4 zeigt eine Seitenansicht der erfindungsgemäßen Befestigungsvorrichtung 1 gemäß Fig. 2. Zu erkennen ist eine Schale 11 mit Luftzuführabschnitten 12 und die Verschlusseinrichtung 4, welche die Schalen 11 der den Rohrsattel bildenden Befestigungsvorrichtung 1 formschlüssig zusammenhält.

Fig. 5 zeigt zwei verschiedene perspektivische Ansichten der erfindungsgemäßen Befestigungsvorrichtung 1 gemäß Fig. 1. In Fig. 5 ist zu erkennen, dass die Innenwand 122 des Luftzuführabschnitts 12 zwei im Wesentlichen halbzylindrische Schalen aufweist, die über strahlenförmig in radialer Richtung zur Innenwand 122 bzw. zum Innenrohr verlaufende Stege mit der Außenwand 123 bzw. dem Außenrohr fest verbunden sind.

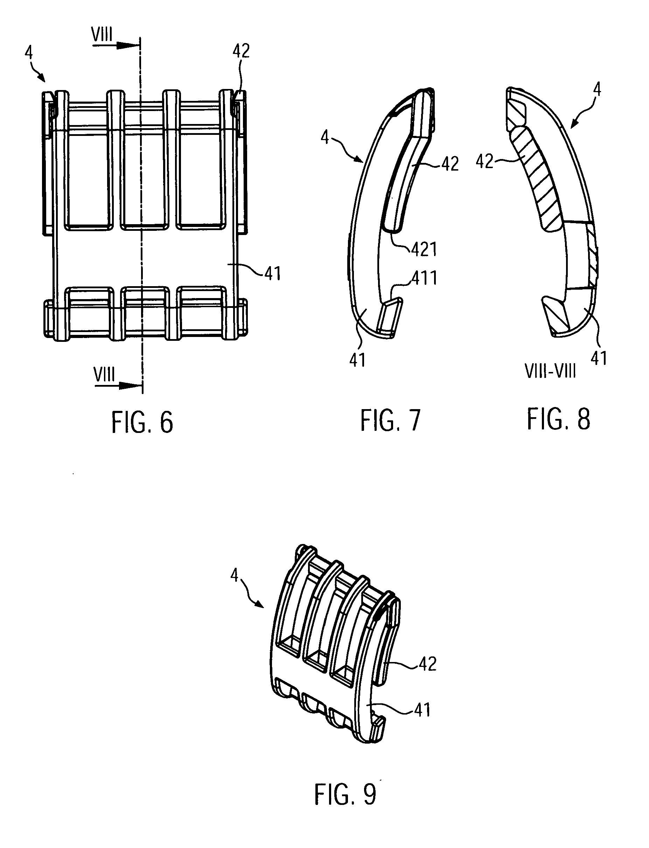

Fig. 6 zeigt eine Vorderansicht der Verschlusseinrichtung 4 der erfindungsgemäßen Befestigungsvorrichtung 1. Die Verschlusseinrichtung 4 umfasst ein im Wesentlichen bogenförmiges Außenteil 41 und ein damit gelenkig verbundenes, im Wesentlichen bogenförmiges, Innenteil 42. Das Außenteil 41 bildet einen längeren Abschnitt bezogen auf eine Gelenkachse der Verschlusseinrichtung 4 als das Innenteil 42. An einem freien Ende weist das Außenteil 41 einen im Wesentlichen keilförmigen Eingriffsabschnitt 411 auf, der mit einer entsprechenden, keilförmigen Hinterschneidung am Außenumfang der Schale 11 der Befestigungsvorrichtung 1 gemäß Fig. 1 in Eingriff bringbar ist. Das Innenteil 42 umfasst an seinem freien Ende einen Eingriffsabschnitt 421, der mit einer entsprechenden keilförmigen Hinterschneidung am Außenumfang der in Fig. 1 linken Schale 11 der erfindungsgemäßen Befestigungsvorrichtung 1 formschlüssig in Eingriff bringbar ist. Die Verschlusseinrichtung 4 bildet einen Kniehebel-Spannverschluss und funktioniert nach dem Prinzip eines Spannverschlusses bei Skischuhen oder dergleichen.

Die bevorzugte Anwendung der erfindungsgemäßen Befestigungsvorrichtung 1 wird nachstehend mit Bezug auf die beiliegenden Zeichnungen beschrieben.

Die erfindungsgemäße Befestigungsvorrichtung 1 für Rohrbelüfter 2 zur Abwasserreinigung wird in Begasungsanlagen von Kläranlagen eingesetzt. Die Befestigungsvorrichtung 1 dient dazu, mindestens einen Rohrbelüfter 2 an einem Zentralrohr 3 derart zu befestigen, dass dem Rohrbelüfter 2 Luft aus dem Zentralrohr 3 zugeführt werden kann.

Es wird von einem Ausgangszustand ausgegangen, in welchem in einem leeren bzw. entleerten Klärbecken ein im Wesentlichen vertikal verlaufendes Luftverteilerrohr bereit gestellt ist. Das Luftverteilerrohr wird im Rahmen der vorliegenden Erfindung auch als Zentralrohr 3 bezeichnet. Zur Installation von Rohrbelüftern 2 an dem Zentralrohr 3 werden auf dimetral gegenüberliegenden Seiten des Zentralrohrs (um 180° versetzt) Luftverteileröffnungen 33 eingebracht, welche die gesamte Rohrwand von der Mantelfläche 31 bis zur Innenwand 32 durchdringen. Das Zentralrohr 3 ist zur Installation der Rohrbelüfter 2 vorzugsweise nicht mit Druckluft beaufschlagt.

Zur Installation der Rohrbelüfter 2 wird die erfindungsgemäße Befestigungsvorrichtung 1 in der geöffneten Konfiguration der Schalen 11 derart um den Umfang des Zentralrohrs 3 angelegt, dass die Zentriervorsprünge 124 in den Luftverteileröffnungen 33 zum Liegen kommen. Die Befestigungsvorrichtung 1 ist derart ausgebildet, dass die Schalen 11 nur dann in die geschlossene Konfiguration überführt werden können, wenn die Zentriervorsprünge 124 in den Luftverteileröffnungen 33 zum Liegen kommen. Die Schalen 11 werden mittels der zuvor beschriebenen Verschlusseinrichtung 4 in den geschlossenen Zustand überführt. Dazu wird die als Kniehebel-Spannverschluss ausgebildete Verschlusseinrichtung 4 derart mit der Befestigungsvorrichtung 1 in Wirkverbindung gebracht, dass sich die Eingriffsabschnitte 41, 42 der Verschlusseinrichtung 4 an unterschiedlichen Schalen 11 in Anlage befinden. Durch Ausüben von Druck auf eine Verbindungsachse der ersten und zweiten Abschnitte 41, 42 der Verschlusseinrichtung 4 werden die beiden Abschnitte 41, 42 aus einer winkeligen Anordnung, in welcher die Abschnitte 41, 42 einen Winkel zwischen 0 und 90° einschließen, in eine parallele Anordnung, in welcher die beiden Abschnitte 41, 42 im Wesentlichen parallel zueinander ausgerichtet sind, überführt. Dadurch verringert sich der Abschnitt der mit Hinterschneidungen an unterschiedlichen Schalen 11 in Eingriff befindlichen Eingriffsabschnitten 411 und 421, so dass die beiden Schalen 11 in der geschlossenen Konfiguration über die Verbindungseinrichtung 4 formschlüssig zusammengehalten werden. In der geschlossenen Konfiguration ist jede Schale über einen O-Ring 113 gegenüber der Mantelfläche 31 des Zentralrohrs 3 abgedichtet.

Zum Anschließen eines Rohrbelüfters 2 wird ein Stützrohr 21 mit im Wesentlichen demselben Außendurchmesser wie der Luftzuführabschnitt 12 der Befestigungsvorrichtung 1 an das freie axiale Ende des Luftzuführabschnitts 12 derart angeschweißt, dass die Mantelflächen des Stützrohrs 21 und des Luftzuführabschnitts 12 im Wesentlichen bündig zueinander verlaufen. Anschließend wird eine elastische, luftdurchlässige aber wasserundurchlässige Membran 12 über das Stützrohr 21 und den Luftzuführabschnitt 12 gezogen und endseitig mit Befestigungsmitteln 23 derart befestigt, dass Luft nur durch die in der Außenwand 123 des Luftzuführabschnitts 12 ausgebildeten Luftaustrittsöffnungen 125 zwischen die Membran 23 und das Stützrohr 21 gelangt. Anschließend wird das Zentralrohr 3 mit Druckluft beaufschlagt. Über den Luftzuführabschnitt 12 kann dem Rohrbelüfter 2 Luft aus dem Zentralrohr 3 zugeführt werden.

## Patentansprüche

1. Befestigungsvorrichtung (1) für Rohrbelüfter (2) zur Abwasserreinigung, um mindestens einen Rohrbelüfter (2) an einem Zentralrohr (3) derart zu befestigen, dass dem Rohrbelüfter (2) Luft aus dem Zentralrohr (3) zugeführt werden kann, wobei die Befestigungsvorrichtung (1) als um den Umfang des Zentralrohrs (3) schliessbarer Rohrsattel ausgebildet ist und gelenkig verbundene Schalen (11) aufweist, wobei zumindest eine der Schalen (11) einen Luftzuführabschnitt (12) aufweist, durch welchen dem Rohrbelüfter (2) Luft aus dem Zentralrohr (3) zugeführt werden kann, **dadurch gekennzeichnet, dass** der Luftzuführabschnitt (12) eine oder mehrere radiale Luftaustrittsöffnungen (125) aufweist, die in einer Mantelfläche des Luftzuführabschnitts (12) ausgebildet sind.

2. Befestigungsvorrichtung (1) nach Anspruch 1 , **dadurch gekennzeichnet, dass** die Schalen (11) mittels einer Verschlusseinrichtung (4) zwischen einer geöffneten Konfiguration, in welcher die Schalen (11) um das Zentralrohr (3) anordenbar und davon lösbar sind, und einer geschlossenen Konfiguration, in welcher die Schalen (11) um den Umfang des Zentralrohrs (3) geschlossen sind, überführbar sind.

3. Befestigungsvorrichtung (1) nach einem der vorangegangenen Ansprüche, **dadurch gekennzeichnet, dass** zumindest eine Schale (11) einen im Wesentlichen bogenförmigen Anlageabschnitt aufweist, der an einer Mantelfläche des Zentralrohrs (3) in Anlage bringbar ist, wobei der Luftzuführabschnitt (12) im Wesentlichen radial vom Anlageabschnitt abragt.

4. Befestigungsvorrichtung nach einem der vorangegangenen Ansprüche, **dadurch gekennzeichnet, dass** der Luftzuführabschnitt (12) einen Zentriervorsprung (124) aufweist, der über eine Anlagefläche (111) des Anlageabschnitts hervorsteht.

5. Befestigungsvorrichtung (1) nach einem der vorangegangenen Ansprüche, **dadurch gekennzeichnet, dass** der Luftzuführabschnitt (12) eine Lufteintrittsöffnung (121) aufweist, über welche Luft aus dem Zentralrohr (3) in den Luftzuführabschnitt (12) eintritt, wobei die Lufteintrittsöffnung (121) zumindest abschnittsweise von dem Zentriervorsprung (124) umrandet ist.

6. Befestigungsvorrichtung (1) nach einem der vorangegangenen Ansprüche, **dadurch gekennzeichnet, dass** der Luftzuführabschnitt (12) eine den Zentriervorsprung (124) umrandende Dichtung (113) aufweist.

7. Befestigungsvorrichtung nach einem der vorangegangenen Ansprüche, **dadurch gekennzeichnet, dass** der Luftzuführabschnitt (12) eine Doppelwandstruktur mit einer Innenwand (122) und einer Aussenwand (123) aufweist.

8. Befestigungsvorrichtung nach einem der vorangegangenen Ansprüche, **dadurch gekennzeichnet, dass** der Zentriervorsprung (124) an einem inneren Ende der Innenwand (122) ausgebildet ist.

9. Befestigungsvorrichtung nach einem der vorangegangenen Ansprüche, **dadurch gekennzeichnet, dass** der Luftzuführabschnitt (12) ein Rückschlagventil (14) aufweist, um einen Austritt von Fluiden aus dem Luftzuführabschnitt (12) zuzulassen und ein Eindringen von Fluiden in den Luftzuführabschnitt (12) zu verhindern.

10. Befestigungsvorrichtung nach einem der vorangegangenen Ansprüche, **dadurch gekennzeichnet, dass** die Schale (11) zumindest eine in Umfangsrichtung des Anlageabschnitts und/oder in Umfangsrichtung des Luftzuführabschnitts (12) verlaufende Versteifungsrippe (15) aufweist.

11. Befestigungsvorrichtung nach einem der vorangegangenen Ansprüche, **dadurch gekennzeichnet, dass** die Verschlusseinrichtung (4) als Kniehebel-Spannverschluss ausgebildet ist und zwei gelenkig verbundene Abschnitte unterschiedlicher Länge aufweist, die mit den Schalen in der geschlossenen Konfiguration derart zusammenwirken, dass sie Kräfte in entgegen gesetzten Richtungen auf zwei unterschiedliche Schalen ausüben.

12. Befestigungsvorrichtung (1) nach einem der vorangegangenen Ansprüche, **dadurch gekennzeichnet, dass** die Schalen (11) identische Formen aufweisen.

13. Befestigungsvorrichtung (1) nach einem der vorangegangenen Ansprüche, **dadurch gekennzeichnet, dass** eine den Luftzuführabschnitt (12) aufweisende Schale (11) einteilig ausgebildet ist.

14. Befestigungsvorrichtung (1) nach einem der vorangegangenen Ansprüche, **dadurch gekennzeichnet, dass** der Luftzuführabschnitt (12) mit einem Stützrohr verbunden ist, wobei der Luftzuführabschnitt (12) und das Stützrohr mit einer luftdurchlässige aber wasserundurchlässigen Membran überzogen sind und Luft durch den Luftzuführabschnitt (12) zwischen das Stützrohr und die Membran einbringbar ist.

## Claims

1. Fastening device (1) for pipe aerators (2) for waste water purification, in order to fasten at least one pipe aerator (2) to a central pipe (3) in such a manner that air can be supplied from the central pipe (3) to the pipe aerator (2), wherein the fastening device (1) is designed as a pipe hanger, which is closable around the circumference of the central pipe (3), and has shells (11) connected in an articulated manner, wherein at least one of the shells (11) has an air supply portion (12) through which air can be supplied from the central pipe (3) to the pipe aerator (2), **characterized in that** the air supply portion (12) has one or more radial air outlet openings (125) which are formed in a lateral surface of the air supply portion (12).

2. Fastening device (1) according to Claim 1, **characterized in that** the shells (11) are transferable by means of a closure device (4) between an open configuration, in which the shells (11) are arrangeable around the central pipe (3) and are releasable therefrom, and a closed configuration, in which the shells (11) are closed around the circumference of the central pipe (3).

3. Fastening device (1) according to either of the preceding claims, **characterized in that** at least one shell (11) has a substantially arc-shaped bearing portion which is bringable to bear against a lateral surface of the central pipe (3), wherein the air supply portion (12) protrudes substantially radially from the bearing portion.

4. Fastening device according to one of the preceding claims, **characterized in that** the air supply portion (12) has a centring projection (124) which protrudes beyond a bearing surface (111) of the bearing portion.

5. Fastening device (1) according to one of the preceding claims, **characterized in that** the air supply portion (12) has an air inlet opening (121) via which air from the central pipe (3) enters the air supply portion (12), wherein the air inlet opening (121) is bordered at least in sections by the centring projection (124).

6. Fastening device (1) according to one of the preceding claims, **characterized in that** the air supply portion (12) has a seal (113) bordering the centring projection (124).

7. Fastening device according to one of the preceding claims, **characterized in that** the air supply portion (12) has a double wall structure with an inner wall (122) and an outer wall (123).

8. Fastening device according to one of the preceding claims, **characterized in that** the centring projection (124) is formed at an inner end of the inner wall (122).

9. Fastening device according to one of the preceding claims, **characterized in that** the air supply portion (12) has a nonreturn valve (14) in order to allow fluids to exit from the air supply portion (12) and to prevent fluids from penetrating into the air supply portion (12).

10. Fastening device according to one of the preceding claims, **characterized in that** the shell (11) has at least one stiffening rib (15) running in the circumferential direction of the bearing portion and/or in the circumferential direction of the air supply portion (12).

11. Fastening device according to one of the preceding claims, **characterized in that** the closure device (4) is designed as a toggle-lever clamping closure and has two portions of differing length which are connected in an articulated manner and interact with the shells in the closed configuration in such a manner that they exert forces in opposite directions on two different shells.

12. Fastening device (1) according to one of the preceding claims, **characterized in that** the shells (11) have identical shapes.

13. Fastening device (1) according to one of the preceding claims, **characterized in that** a shell (11) having the air supply portion (12) is formed as a single part.

14. Fastening device (1) according to one of the preceding claims, **characterized in that** the air supply portion (12) is connected to a support pipe, wherein the air supply portion (12) and the support pipe are covered with an air-permeable, but waterimpermeable membrane, and air is introducible between the support pipe and the membrane by the air supply portion (12).

## Revendications

1. Dispositif de fixation (1) pour aérateur tubulaire (2) destiné à l'épuration des eaux usées, pour fixer au moins un aérateur tubulaire (2) à un tube central (3), de telle manière que de l'air puisse être fourni à l'aérateur tubulaire (2) à partir du tube central (3), dans lequel le dispositif de fixation (1) est réalisé sous la forme d'une selle tubulaire refermable autour du pourtour du tube central (3) et présente des coquilles (11) reliées de manière articulée, dans lequel au moins une des coquilles (11) présente une partie d'arrivée d'air (12), à travers laquelle de l'air peut être fourni à l'aérateur tubulaire (2) à partir du tube central (3), **caractérisé en ce que** la partie d'arrivée d'air (12) présente une ou plusieurs ouvertures radiales de sortie d'air (125), qui sont formées dans une surface latérale de la partie d'arrivée d'air (12).

2. Dispositif de fixation (1) selon la revendication 1, **caractérisé en ce que** les coquilles (11) peuvent être commutées au moyen d'un dispositif de fermeture (4) entre une configuration ouverte, dans laquelle les coquilles (11) peuvent être disposées autour du tube central (3) et peuvent en être détachées, et une configuration fermée, dans laquelle les coquilles (11) sont fermées autour du pourtour du tube central (3).

3. Dispositif de fixation (1) selon l'une quelconque des revendications précédentes, **caractérisé en ce qu'**au moins une coquille (11) présente une partie d'appui essentiellement en forme d'arc, qui peut être appliquée sur une surface latérale du tube central (3), dans lequel la partie d'arrivée d'air (12) s'étend essentiellement radialement à partir de la partie d'appui.

4. Dispositif de fixation selon l'une quelconque des revendications précédentes, **caractérisé en ce que** la partie d'arrivée d'air (12) présente une saillie de centrage (124), qui est saillante sur une face d'appui (111) de la partie d'appui.

5. Dispositif de fixation (1) selon l'une quelconque des revendications précédentes, **caractérisé en ce que** la partie d'arrivée d'air (12) présente une ouverture d'entrée d'air (121), par laquelle de l'air pénètre dans la partie d'arrivée d'air (12) en provenance du tube central (3), dans lequel l'ouverture d'entrée d'air (121) est entourée au moins localement par la saillie de centrage (124).

6. Dispositif de fixation (1) selon l'une quelconque des revendications précédentes, **caractérisé en ce que** la partie d'arrivée d'air (12) présente un joint d'étanchéité (113) entourant la saillie de centrage (124).

7. Dispositif de fixation selon l'une quelconque des revendications précédentes, **caractérisé en ce que** la partie d'arrivée d'air (12) présente une structure à double paroi avec une paroi intérieure (122) et une paroi extérieure (123).

8. Dispositif de fixation selon l'une quelconque des revendications précédentes, **caractérisé en ce que** la saillie de centrage (124) est formée à une extrémité intérieure de la paroi intérieure (122).

9. Dispositif de fixation selon l'une quelconque des revendications précédentes, **caractérisé en ce que** la partie d'arrivée d'air (12) présente une soupape anti-retour (14), afin de permettre une sortie de fluides hors de la partie d'arrivée d'air (12) et d'empêcher une pénétration de fluides dans la partie d'arrivée d'air (12).

10. Dispositif de fixation selon l'une quelconque des revendications précédentes, **caractérisé en ce que** la coquille (11) présente au moins une nervure de raidissement (15) s'étendant dans la direction périphérique de la partie d'appui et/ou dans la direction périphérique de la partie d'arrivée d'air (12).

11. Dispositif de fixation selon l'une quelconque des revendications précédentes, **caractérisé en ce que** le dispositif de fermeture (4) est réalisé sous la forme d'une fermeture à genouillère et présente deux parties de longueur différente reliées de manière articulée, qui coopèrent avec les coquilles dans la configuration fermée, de telle manière qu'elles exercent des forces dans des directions opposées sur deux coquilles différentes.

12. Dispositif de fixation (1) selon l'une quelconque des revendications précédentes, **caractérisé en ce que** les coquilles (11) présentent des formes identiques.

13. Dispositif de fixation (1) selon l'une quelconque des revendications précédentes, **caractérisé en ce qu'**une coquille (11) présentant la partie d'arrivée d'air (12) est réalisée en une seule pièce.

14. Dispositif de fixation (1) selon l'une quelconque des revendications précédentes, **caractérisé en ce que** la partie d'arrivée d'air (12) est raccordée à un tube de support, dans lequel la partie d'arrivée d'air (12) et le tube de support sont recouverts d'une membrane perméable à l'air mais imperméable à l'eau et de l'air peut être introduit par la partie d'arrivée d'air (12) entre le tube de support et la membrane.
